# DEMANDE DE BREVET EUROPEEN

(11) **EP 0 810 074 A1**
(43) Date de publication de la demande: **03.12.1997**
(21) Numéro de dépôt: 97401172.8
(22) Date de dépôt: 28.05.1997
(51) Int. Cl.: B29C 45/17, B29C 45/82

(54) **Dispositif de pilotage de moyens de commande du profil d'une courbe d'un fluide injecté dans un moule d'injection assistée par fluide**

(30) Priorité: 30.05.1996 FR 9606674
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Barry, Lionel, 94220 Charenton-le-Pont (FR); Verghade, Jean-Marie, 94410 St Maurice (FR)
(74) Mandataire: Vesin, Jacques

(57) **Abrégé**

Ce dispositif de pilotage de moyens de commande (2) du profil d'une courbe de pression d'un fluide injecté dans un moule ou dans une partie d'un moule d'injection (3) assistée par fluide, à partir d'une source de fluide sous pression (1), du type comportant une unité de traitement d'informations (4) de pilotage du fonctionnement des moyens de commande (2) à partir d'une courbe de pression de référence (5), est caractérisé en ce que l'unité de traitement d'informations (4) est adaptée pour engendrer (en 6) au moins un signal de sortie logique programmable et synchronisé sur le profil de la courbe de pression de fluide (5), afin de piloter le fonctionnement d'au moins un organe fonctionnel associé au dispositif ou au moule.

## Description

La présente invention concerne un dispositif de pilotage de moyens de commande du profil d'une courbe de pression d'un fluide injecté dans un moule ou dans une partie d'un moule d'injection assistée par fluide.

On connaît déjà dans l'état de la technique, un certain nombre de dispositifs de ce type, dans lesquels les moyens de commande sont implantés entre une source de fluide sous pression et un moule ou une partie correspondante d'un moule d'injection assistée par fluide.

Le fonctionnement de ces moyens de commande est piloté par l'intermédiaire d'une unité de traitement d'informations, à partir d'une courbe de pression de référence.

L'unité de traitement d'informations est donc adaptée pour délivrer des signaux de pilotage de ces moyens en fonction de cette courbe de référence, pour obtenir la pression souhaitée en sortie de ceux-ci et donc dans le moule ou la partie de moule correspondante.

C'est ainsi par exemple que dans le document EP-0 310 914, on a décrit un dispositif de ce type dans lequel les moyens de commande comprennent plusieurs circuits en parallèle, munis chacun d'une électrovanne fonctionnant en tout ou rien associée à un détendeur et disposés en série avec le reste de la source.

L'unité de traitement d'informations est alors adaptée pour piloter une ou plusieurs des électrovannes afin d'obtenir en sortie de la source, une courbe de pression correspondante.

Ce dispositif fonctionne par paliers de pression, chaque circuit délivrant une pression fixe établie par calage manuel du détendeur.

Cependant, il peut arriver dans certaines applications, qu'il soit nécessaire de piloter un ou plusieurs organes fonctionnels associés au dispositif ou au moule.

Dans l'état de la technique, cette commande est assurée par l'intermédiaire de moyens dont le fonctionnement est lié à celui du moule.

On conçoit que ceci peut présenter un certain nombre d'inconvénients, notamment au niveau de la synchronisation de ce pilotage.

Le but de l'invention est donc de résoudre ces problèmes.

A cet effet, l'invention a pour objet un dispositif de pilotage de moyens de commande du profil d'une courbe de pression d'un fluide injecté dans un moule ou dans une partie d'un moule d'injection assistée par fluide, à partir d'une source de fluide sous pression, du type comportant une unité de traitement d'informations de pilotage du fonctionnement des moyens de commande à partir d'une courbe de pression de référence, caractérisé en ce que l'unité de traitement d'informations est adaptée pour engendrer au moins un signal de sortie logique programmable et synchronisé sur le profil de la courbe de pression de fluide, afin de piloter le fonctionnement d'au moins un organe fonctionnel associé au dispositif ou au moule.

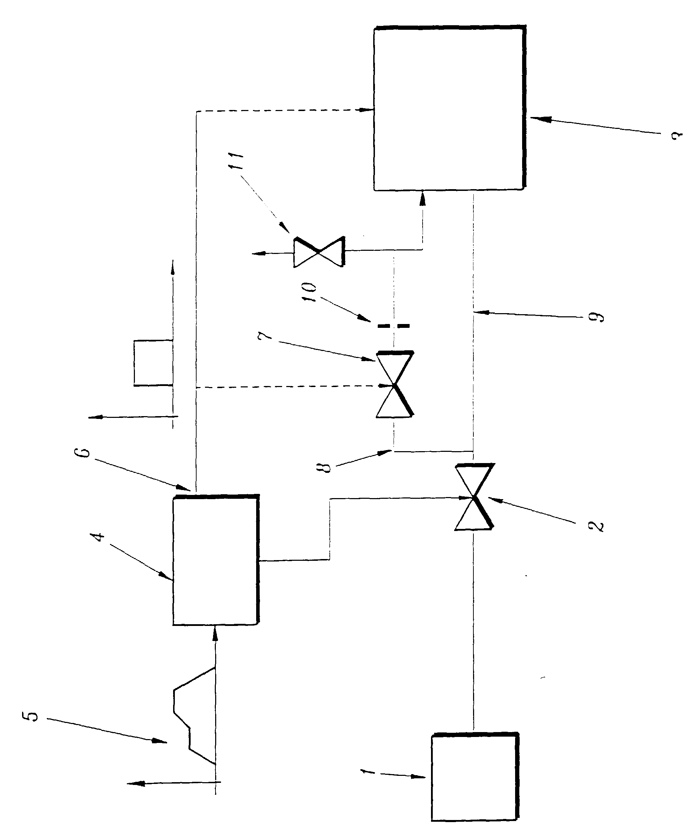

L'invention sera mieux comprise à la lecture de la description qui va suivre, donnée uniquement à titre d'exemple et faite en se référant au dessin annexé, qui représente un schéma synoptique illustrant la structure générale d'un dispositif selon l'invention.

On reconnaît en effet sur cette figure, un dispositif de pilotage du fonctionnement de moyens de commande du profil d'une courbe de pression d'un fluide injecté dans un moule ou dans une partie d'un moule d'injection assistée par fluide.

L'entrée de ces moyens de commande est raccordée à une source de fluide sous pression désignée par la référence générale 1 sur cette figure et ceux-ci comprennent par exemple une électrovanne proportionnelle désignée par la référence générale 2, dont la sortie est raccordée à un moule ou une partie correspondante d'un moule d'injection assistée par fluide, désigné par la référence générale 3 sur cette figure.

Ce moule étant bien connu dans l'état de la technique, on ne le décrira pas plus en détail par la suite.

Le fonctionnement des moyens de commande 2 est piloté par une unité de traitement d'informations 4 à partir d'une courbe de pression de référence désignée par la référence générale 5, entrée et stockée dans cette unité.

On conçoit alors que cette unité de traitement d'informations est adaptée pour délivrer à ces moyens de commande, des signaux de pilotage en fonction de cette courbe.

Selon l'invention, cette unité de traitement d'informations 4 est également adaptée pour engendrer au moins un signal de sortie logique programmable et synchronisé sur le profil de la courbe de pression de fluide, pour piloter le fonctionnement d'au moins un organe fonctionnel associé au dispositif ou au moule.

Sur la figure, la sortie correspondante de l'unité de traitement d'informations 4 est désignée par la référence générale 6 et permet donc de délivrer un signal de sortie logique programmable qui est synchronisé sur le profil de la courbe de pression de fluide.

Différentes méthodes de programmation de ce signal de sortie logique peuvent être envisagées.

C'est ainsi par exemple que celui-ci peut être programmé en fonction d'un seuil de pression ou encore en fonction d'un instant de transition du signal et d'une durée d'un niveau logique de celui-ci.

Cette programmation est réalisée par exemple par un opérateur grâce à des moyens d'entrée de données classiques associés à l'unité de traitement d'informations.

Le signal correspondant de sortie de l'unité de traitement d'informations peut alors être utilisé pour piloter un organe fonctionnel tel qu'un actionneur de déplacement d'une partie mobile du moule.

C'est ainsi par exemple que lors du processus de fabrication d'une pièce dans un tel moule, il peut être nécessaire de déplacer une partie quelconque de celui-ci à un moment précis du cycle de fabrication de la pièce.

Le fait que le signal de sortie logique soit délivré par l'unité de traitement d'informations permet de synchroniser de manière très précise l'émission de celui-ci lors de ce cycle de fabrication.

Cependant, ce signal peut également être utilisé pour piloter par exemple une électrovanne implantée dans un circuit de fluide sous pression en sortie des moyens de commande.

C'est ainsi par exemple que sur cette figure, cette électrovanne est désignée par la référence générale 7 et est implantée dans un circuit auxiliaire de fluide 8 en parallèle sur un circuit principal de fluide 9 en sortie des moyens de commande 2. Ce circuit auxiliaire de fluide 8 est également muni d'un orifice calibré 10 et d'une électrovanne de purge 11 et permet d'alimenter par exemple en fluide sous pression une partie du moule, de manière décalée par rapport à l'alimentation de la partie de celui-ci raccordée au circuit principal de fluide 9.

Cette structure permet alors d'alimenter deux voies d'injection de fluide dans le moule, à l'aide d'une seule ligne d'alimentation en fluide, ce qui permet de réaliser des économies de coût, notamment au niveau des moyens de commande.

Il va de soi bien entendu que ce signal logique peut être utilisé pour piloter d'autres organes fonctionnels associés au dispositif ou au moule.

On conçoit alors que le dispositif selon l'invention présente un certain nombre d'avantages dans la mesure où il permet d'engendrer des signaux logiques synchronisés sur le profil de la courbe de pression.

## Revendications

1. Dispositif de pilotage de moyens de commande (2) du profil d'une courbe de pression d'un fluide injecté dans un moule ou dans une partie d'un moule d'injection (3) assistée par fluide, à partir d'une source de fluide sous pression (1), du type comportant une unité de traitement d'informations (4) de pilotage du fonctionnement des moyens de commande (2) à partir d'une courbe de pression de référence (5), caractérisé en ce que l'unité de traitement d'informations (4) est adaptée pour engendrer (en 6) au moins un signal de sortie logique programmable et synchronisé sur le profil de la courbe de pression de fluide (5) afin de piloter le fonctionnement d'au moins un organe fonctionnel associé au dispositif ou au moule.

2. Dispositif selon la revendication 1, caractérisé en ce que l'organe fonctionnel est un actionneur de déplacement d'une partie mobile du moule.

3. Dispositif selon la revendication 1 ou 2, caractérisé en ce que l'organe fonctionnel est une électrovanne (7) implantée dans un circuit de fluide (8) sous pression en sortie des moyens de commande (2).

4. Dispositif selon la revendication 3, caractérisé en ce que le circuit de fluide sous pression (8) est un circuit auxiliaire connecté en parallèle sur un circuit principal (9) de fluide sous pression en sortie des moyens de commande (2) et raccordé à une partie du moule (3).

5. Dispositif selon la revendication 4, caractérisé en ce que le circuit auxiliaire est muni d'un orifice calibré (10) et d'une électrovanne de purge (11).
